# EUROPEAN PATENT SPECIFICATION

(11) **EP 0 396 494 B1**
(45) Date of publication and mention of the grant of the patent: **15.06.1994**
(21) Application number: 90630095.9
(22) Date of filing: 27.04.1990
(51) Int. Cl.: B60C 9/00, B60C 9/08, B60C 9/20

(54) **Radial ply tire**
Radialer Luftreifen
Bandage pneumatique radial

(30) Priority: 01.05.1989 US 345925
(43) Date of publication of application: 07.11.1990
(73) Proprietor: THE GOODYEAR TIRE & RUBBER COMPANY, Akron, Ohio 44316-0001 (US)
(72) Inventor: Navaux,Stanley, Bastogne (BE)
(74) Representative: Leitz, Paul

(56) References cited:
- EP-A- 0 287 497
- EP-A- 0 296 093
- EP-A- 0 312 038
- EP-A- 0 329 594
- EP-A- 0 374 357
- LU-A- 85 964
- RESEARCH DISCLOSURE, April 1989, disclosure no. 30076, London, GB; E.I. DU PONTDE NEMOURS & CO.: "Polyamide monofilament"

## Description

The present invention relates to a radial tire having a carcass comprising several plies, reinforced by substantially radially oriented parallel organic filaments, yarns or cords. The filaments, yarns or cords of each carcass ply are differently oriented with respect to the equatorial plane of the tire and the plies are folded axially around a pair of axially spaced bead cores. The tire further comprises at least two belt plies disposed radially outwardly of the carcass plies in a crown region of the tire, the belt plies also being reinforced by organic filaments, yarns or cords.

Such tires are disclosed for example in patent application EP-A-0 329 592. They are, however, built according to a rather expensive manufacturing process and do not perfectly meet the airplane industry's requirements for extremely light and compact tires.

A known tire comprising the features of the preamble of claim 1 is shown, e.g. in EP-A-0 312 038.

It is generally recognized in the tire art that tires suitable for use on aircraft must be capable of operating under conditions of very high speeds and large loads as compared to tires used on automobiles, busses, trucks or similar earthbound vehicles. It is understood, however, that tires for such earthbound vehicles may advantageously be made in accordance with the broad aspects of the invention described herein. As used herein and in the claims, a tire is "suitable for use on an aircraft" if the tire is of a size and load range, or ply rating, specified in either the YEARBOOK OF THE TIRE AND RIM ASSOCIATION, or the YEARBOOK OF THE EUROPEAN TYRE AND RIM TECHNICAL ORGANIZATION, for the year in which the tire is manufactured, or in the current U.S.A. military specification "MIL-T-5041".

The present invention aims to provide a radial tire particularly suitable for use on an aircraft having excellent dimensional and lateral stability, superior carcass durability as well as low heat generation.

In accordance with the invention there is provided a pneumatic radial ply tire as defined in the appended claims.

To acquaint persons skilled in the art with the principles of the invention, certain presently preferred embodiments illustrative of the best mode now contemplated for the practice of the invention are described herein making reference to the attached drawings and in which drawings:
Fig. 1 is a cross-sectional view of a tire according to one embodiment of the invention taken in a plane that contains the axis of rotation of the tire;
Fig. 2 is an enlarged fragmentary view of a bead portion of the tire illustrated in Fig. 1; and
Figs. 3 to 4 are enlarged cross-sectional views of monofilament sections suitable for use in belt and breaker plies of a tire according to the invention.

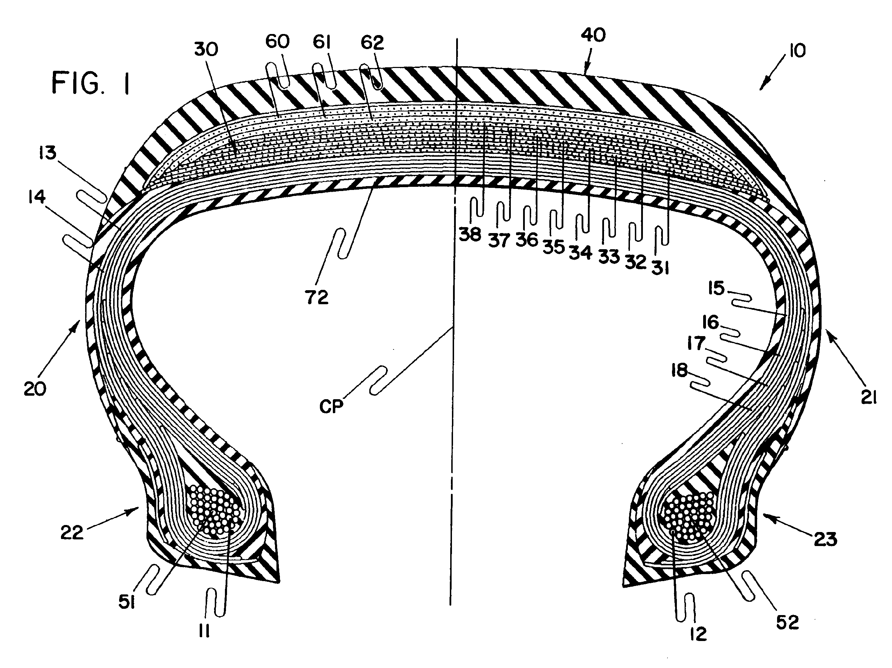

With reference to Fig. 1, an aircraft tire 10 of size 25.5 x 8.0 R 14 has a pair of substantially inextensible annular bead cores 11, 12 which are axially spaced apart with several carcass plies 13, 14, 15, 16, 17, 18 extending between the bead cores.

As used herein and in the claims, the terms "axial" and "axially" refer to directions which are parallel to the axis of rotation of a tire, and the terms "radial" and "radially" refer to directions that are radially toward or away from to the axis of rotation of a tire. Each of the carcass plies 13 to 18 comprises a plurality of reinforcing elements oriented at 75° to 90°, preferably 80° to 89°, with respect to the equatorial plane (CP) of the tire. Put another way, a tire in accordance with the present invention is commonly referred to as a radial ply tire. As used herein and in the claims, the "equatorial plane" of a tire is a plane that is perpendicular to the axis of rotation of the tire and passes through the center of the tire tread. According to the invention the carcass plies comprise at least two turn-up carcass plies 15, 16, 17, 18 and at least one turn-down carcass ply 13, 14. Each of the turn-up carcass plies 15, 16, 17, 18 is folded axially and radially outwardly about each of the bead cores 11, 12 and the turn-down carcass plies 13, 14 are folded at least partially radially and axially inwardly about each of the bead cores 11, 12 and the turn-up carcass plies 15, 16, 17, 18. The turn-down carcass plies 13, 14 are folded around the bead cores to such a degree that the respective edges of said turn-down plies are located axially inwardly of the axial midpoints 51, 52 of the respective bead cores 11, 12.

Tires have been manufactured in which the reinforcing elements of the two radially innermost turn-up carcass plies 15, 16 were oriented at 82° with respect to the equatorial plane CP, the reinforcing elements of the third and fourth turn-up carcass plies 17, 18 were oriented at 85° with respect to the equatorial plane CP, and the reinforcing elements of the two turn-down carcass plies 13, 14 were oriented at 88° with respect to the equatorial plane CP. At the time of writing of this specification, it is not believed to be essential to the practice of this invention, that reinforcing elements of two neighboring carcass plies have the same orientation. It is, however, understood that in preferred embodiments of the invention the orientation of the reinforcing elements in each carcass ply, or pair of carcass plies, should be nearer to 90° than the orientation of the reinforcing elements of the radially next innermost ply, or pair of carcass plies, and the included angles between the angles of radially adjacent carcass plies should not be greater than 10°, and preferably not greater than 4°. For details about the problem of ply angles, reference is hereby made to US patent application serial No. 156 624 (filed on 17 February, 1988).

If the tire is of the tubeless variety, a substantially air impervious layer 72 is disposed inwardly of all of the carcass plies. Most preferably a barrier ply (not shown) is disposed between the air impervious layer 72 and the innermost turn-up carcass ply 15. The barrier ply functions to separate the air impervious layer from the elastomeric material in which the reinforcing elements of the carcass ply 15 are embedded. Tires have been manufactured according to the invention having a barrier ply comprising reinforcing elements of 840/1 nylon cords as described in EP patent No. 172 294.

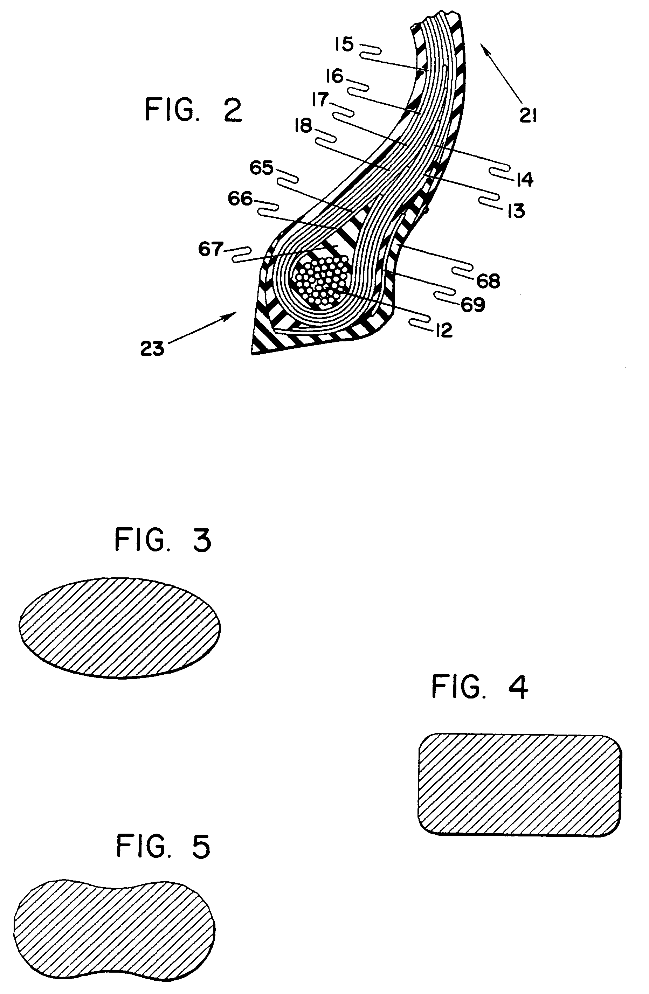

The reinforcing elements of all of the carcass plies 13 to 18 can be substantially the same and each comprise a monofilament of 4400 dTex nylon. A monofilament is by definition a cord consisting of one filament. The monofilaments can either have a round section or can be flattened as discussed hereafter, with reference to Fig. 3-5. The monofilaments in each ply are preferably disposed with a minimum density of 16 EPI in order to yield the desired mechanical characteristics of the tire carcass. As the plies of a radial tire go through cycles of tension and compression the fatigue characteristics are of outstanding importance. Nylon monofilaments having the following characteristics:
tenacity at break of at least 6 cN/dTex
modulus of at least 30 cN/dTex
elongation at break of at least 15 %
lead to a carcass having the required properties to be implemented in high speed and high internal pressure tires such as aircraft tires.

A belt structure 30 comprising two or more belt plies 31-38 featuring a pyramidal configuration is disposed radially outwardly of all of the carcass plies 13-18 in a crown region of the tire 10. A ground engaging tread portion 40 is disposed radially outwardly of the belt structure 30, and a sidewall portion 20, 21 extends radially inwardly from each axial edge of the tread portion to a respective bead portion 22, 23. In the preferred embodiment illustrated in Fig. 1, each of the 8 belt plies comprises parallel nylon monofilaments having a density of 18 EPI and being oriented at 10° to 20° with respect to the equatorial plane CP of the tire and has a fabric density of 18 EPI. Tires have been manufactured according to this preferred embodiment wherein the 4400 dTex nylon monofilaments are flattened and have the following characteristics:
section height : 0.4 mm
section width: 1.2 mm
tenacity at break: 7.5 cN/dTex
modulus: 50 cN/dTex
elongation at break: 19 %
shrinkage: 3.7 %
The different measurements were made using a standard tensile test and, for the shrinkage measurement, a Testrite shrinkage meter.

One or more layers 60-62, each of which is formed from a single spirally wound strip, oriented at substantially 0° with respect to the equatorial plane CP, are interposed between the belt structure 30 and the tread portion 40. The spirally wound strips extend across the entire width of the belt and are reinforced through cords, having a density of some 19 EPI and consisting of 2100/3 dTex nylon. Each layer 60-62 can also be made of a spirally wound, rubberized single nylon cord or monofilament.

It is understood that the particular belt structure illustrated in Fig. 1 and described herein is merely an example used in a preferred embodiment and that a tire designer may employ any arrangement of unfolded or even folded belt plies in accordance with the performance requirements of a particular tire while still practicing the present invention. Spirally wound, nylon reinforced strips in the radially outer belt plies together with the monofilament nylon reinforcing the radially inner belt plies contribute to tires which possess the strength needed to resist extraordinary levels of deflection and high speed (such as is the case for aircraft tires).

The disposition of reinforcing strips in the bead portions of tires according to the preferred embodiment is believed to contribute to the product performance. In the preferred embodiment, several reinforcing strips are located above each bead portion 22, 23, between the turn-up and turn-down carcass plies.

The arrangement of the reinforcing strips can best be described by referring to Fig. 2, which is an enlarged fragmentary view of a bead portion of the tire illustrated in Fig. 1. At least one reinforcing strip 65, 66 of 940/2 dTex nylon cords has at least a portion interposed between the radially outermost turn-up carcass ply 18 and the radially innermost turn-down ply 14. Preferably, the reinforcing strips 65, 66 have their radially outermost edge of any of the turn-up carcass plies, follow the path of turn-up plies, extend along the apex 67 and are folded part way around the respective bead core 11, 12. If desired, a single strip of nylon cords could be substituted for the two strips 65, 66 as long as it is disposed in substantially the same manner. The nylon cords of the reinforcing strips 65, 66 should have a fabric density of about 24 EPI and be disposed at angles of 30° to 60° with respect to the circumferential direction of the tire, preferably at 40° to 50°. The apex 67 is made of rubber having a Shore A hardness of 76 to 84.

Between the radially outermost turn-down carcass ply 13 and the chafer 68, there is located a further reinforcing ply 69, known in the art as a semi-chipper. This semi-chipper is reinforced by nylon cords having an inclination between 50° and 70° with respect to the circumferential lines of the tire.

Figs. 3 to 5 show sections of nylon monofilaments particularly suited for practicing the invention. Slightly flattened filaments with a substantially oval section (see Fig. 3), strongly flattened filaments with rounded off edges (see Fig. 4) or having a central constriction (see Fig. 5), offer gauge advantages and have a lower rivet area for a given density of cords (EPI) than filaments with conventional circular cross-section. Preferably, the nylon monofilaments should have their greatest linear cross-sectional extent, i.e. their width, two to five times the linear cross-sectional extent perpendicular to said width, i.e. their thickness. Consequently they allow the building of lighter and more compact tires, which in addition have a better lateral stability. In order to improve the adhesion of rubber to the filaments, profiled filaments can be of advantage; filament cross-sections having sharp edges are, however, susceptible to crack generation in the neighboring rubber and should consequently be avoided. It is of advantage in practicing the invention, to coat the filaments with a suitable adhesive to promote adherence of rubber to the monofilaments.

Monofilaments of nylon, particularly well suited for implementing the invention are those sold by E.I. Du Pont de Nemours & Co, of Wilmington, Delaware, under the Trademark "HYTEN".

## Claims

1. A pneumatic tire (10) comprising at least two carcass plies (13-18) folded at least in part axially around a pair of axially spaced apart bead cores (11,12), each carcass ply comprising a plurality of parallel reinforcing elements which are oriented at 75° to 90° with respect to an equatorial plane (CP) of the tire, two or more belt plies (31-38) being disposed radially outwardly of said carcass plies in a crown region of the tire, the reinforcing elements of the carcass plies (13-18) consisting of nylon monofilaments of at least 3 000 dTex, having a tenacity of at least 6 cN/dTex, and having an oblong cross-section with their greatest linear cross-sectional extent i. e. their width, two to five times the linear cross-sectional extent perpendicular to said width, said tire characterized by said reinforcing elements of the carcass plies (13-18) having a modulus of at least 35 cN/dTex and a shrinkage of at most 5 %, and by the reinforcing elements of the belt plies (31-38) consisting of nylon monofilaments of at least 3000 dTex, having a tenacity of at least 6 cN/dTex, a modulus of at least 35 cN/dTex and a shrinkage of at most 5 %.

2. A pneumatic tire (10) as described in claim 1 characterized by at least one layer (60-62) of a spirally wound strip interposed between said belt plies (31-38) and a tread portion (40) of the tire, said strip being reinforced by multi-filament nylon cords oriented at substantially 0° with respect to the equatorial plane (CP) of the tire.

3. A pneumatic tire (10) as described in any of the preceding claims characterized by at least two turn-up carcass plies (15-18) and at least one turn-down carcass ply (13-14), each turn-up carcass ply being folded axially and radially outwardly about each bead core (11, 12) and each turn-down carcass ply being folded at least partially axially inwardly about the turn-up carcass plies and the bead cores.

4. A pneumatic tire (10) as described in any of the preceding claims characterized by the reinforcing elements of the radially innermost carcass ply (15) being oriented at about 82° with respect to the equatorial plane, the reinforcing elements of the radially outermost carcass ply (13) being oriented at about 90° with respect to the equatorial plane, and the reinforcing elements of at least one carcass ply located between the innermost and outermost carcass plies being oriented at about 85° with respect to the equatorial plane (CP).

5. A pneumatic tire (10) as described in claim 3 or 4 characterized by comprising at least one strip (65,66) reinforced by nylon cords interposed between the radially innermost turn-down carcass ply (14) and the neighboring turn-up carcass ply (18), the radially outermost edges of the reinforcing strips being located radially outwardly of the radially outermost edge of any of the turn-up carcass plies (15-18), the strips following the path of the turn-up plies, extending along the apex (67) and being folded around the respective bead cores (11,12).

6. A pneumatic tire (10) as described in claim 5 characterized by the nylon cords of the reinforcing strips (65,66) being disposed at angles of 30° to 60° with respect to the circumferential direction of the tire.

7. A pneumatic tire (10) as described in any of the preceding claims characterized by the monofilament reinforcing elements being at least 3500 dTex nylon having a tenacity of at least 7 cN/dTex, a modulus of at least 40 cN/dTex, an elongation at break of at least 18 % and a shrinkage of at most 4 %.

8. A pneumatic tire (10) as described in any of the preceding claims characterized by the reinforcing elements of the belt plies (31-38) having an oblong cross-section with their greatest linear cross-sectional extent i. e. their width, two to five times the linear cross-sectional extent perpendicular to said width.

## Patentansprüche

1. Luftreifen (10) mit mindestens zwei Karkassenlagen (13 bis 18), zu mindest teilweise axial um ein Paar axial beabstandete Wulstkerne (11, 12) gefaltet, wobei jede Karkassenlage eine Vielzahl von parallelen Verstärkungselementen aufweist, die unter 75° bis 90° bezüglich einer Äquatorialebene (CP) des Reifens angeordnet sind, zwei oder mehr Gürtellagen (31-38), die radial außerhalb der Karkassenlagen in einer Laufflächenkrone des Reifens angeordnet sind, wobei die Verstärkungselemente der Karkassenlagen (13-18) aus Nylon-Monofilamenten von mindestens 3000 dTex bestehen, mit einer Zähigkeit von mindestens 6 cN/dTex und mit einem länglichen Querschnitt, wobei ihre größte lineare Querschnittsausdehnung, d.h. ihre Breite, das zwei- bis fünffache der linearen Querschnittsausdehnung senkrecht zur Breite beträgt, dadurch gekennzeichnet, daß die Verstärkungselemente der Karkassenlagen (13-18) einen Modul von mindestens 35 cN/dTex und eine Schrumpfung von höchstens 5 % aufweisen und daß die Verstärkungselemente der Gürtellagen (31-38) aus Nylon-Monofilamenten von mindestens 3000 dTex bestehen, eine Zähigkeit von mindestens 6 cN/dTex, einen Modul von mindestens 35 cN/dTex und eine Schrumpfung von höchstens 5 % aufweisen.

2. Luftreifen (10) gemäß Anspruch 1, dadurch gekennzeichnet, daß mindestens eine Lage (60-62) eines spiralförmig gedrehten Streifens eingefügt ist zwischen den Gürtellagen (31-38) und einem Laufflächenteil (40) des Reifens, wobei der Streifen durch Multifilament-Nylonkord verstärkt ist, das im wesentlichen unter 0° bezüglich der Äquatorialebene (CP) des Reifens angeordnet ist.

3. Luftreifen (10) gemäß einem der vorangehenden Ansprüche, gekennzeichnet durch mindestens zwei aufwärts (umgelegte) Karkassenlagen (15-18) und mindestens eine abwärts (umgelegte) Karkassenlage (13-14), wobei die aufwärts umgelegte Karkassenlage axial und radial nach außen um jeden Wulstkern (11, 12) gefaltet ist und jede abwärts umgelegte Karkassenlage zumindest teilweise axial nach innen um die aufwärts umgelegten Karkassenlagen und Wulstkerne gefaltet ist.

4. Luftreifen (10) wie in einem der vorangehenden Ansprüche beschrieben, dadurch gekennzeichnet, daß die Verstärkungselemente der radial innersten Karkassenlage (15) unter ungefähr 82° in Bezug zu der äquatorialen Ebene ausgerichtet sind, die Verstärkungselemente der radial äußersten Karkassenlage (13) unter etwa 90° bezüglich der äquatorialen Ebene orientiert sind, und die Verstärkungselemente von mindestens einer Karkassenlage, die angeordnet ist zwischen den innersten und den äußersten Karkassenlagen, unter etwa 85° in bezug auf die Äquatorialebene (CP) orientiert sind.

5. Luftreifen (10) gemäß Anspruch 3 oder 4, dadurch gekennzeichnet, daß er mindestens einen durch Nylonkord verstärkten Streifen (65, 66) aufweist, der zwischen der radial innersten abwärts umgelegten Karkassenlage (14) und der benachbarten aufwärts umgelegten Karkassenlage (18) eingefügt ist, wobei die radial äußersten Kanten der Verstärkungsstreifen radial außerhalb von der radial äußersten Kante von beliebigen aufwärts umgelegten Karkassenlagen (15-18) angeordnet sind, wobei die Streifen dem Weg der aufwärts umgelegten Lagen folgen, sich entlang dem APEX (67) erstrecken, und um die entsprechenden Wulstkerne (11, 12) gefaltet sind.

6. Luftreifen (10) gemäß Anspruch 5, dadurch gekennzeichnet, daß die Nylonkorde der Verstärkungsstreifen (65, 66) unter Winkeln von 30° bis 60° bezüglich der Umfangsrichtung des Reifens angeordnet sind.

7. Luftreifen (10) nach einem der vorangehenden Ansprüche, dadurch gekennzeichnet, daß die Monofilamentverstärkungselemente aus mindestens 3500 dTex Nylon bestehen, mit einer Zähigkeit von mindestens 7 cN/dTex, einem Modul von mindestens 40 cN/dTex, einer Bruchdehnung von mindestens 18 % und einer Schrumpfung von höchstens 4 %.

8. Luftreifen (10) nach einem der vorangehenden Ansprüche, dadurch gekennzeichnet, daß die Verstärkungselemente der Gürtellagen (31-38) einen länglichen Querschnitt aufweisen, wobei ihre größte lineare Querschnittsausdehnung, d.h. Breite, das zwei- bis fünffache der linearen Querschnittsausdehnung senkrecht zur Breite beträgt.

## Revendications

1. Bandage pneumatique (10) comprenant au moins deux nappes de carcasse (13-18) repliées au moins en partie axialement autour d'une paire de tringles de talons (11, 12) axialement séparées, chaque nappe de carcasse comprenant plusieurs éléments de renforcement parallèles qui sont orientés en formant un angle de 75° à 90° par rapport au plan équatorial (CP) du bandage pneumatique, deux ou plusieurs nappes de ceinture (31-38) étant disposées radialement à l'extérieur desdites nappes de carcasse dans une région de couronne du bandage pneumatique, les éléments de renforcement des nappes de carcasse (13-18) étant constitués par des monofilaments en nylon d'au moins 3.000 dTex ayant une résistance d'au moins 6 cN/dTex et ayant une section transversale oblongue, leur étendue linéaire maximale en coupe transversale, c'est-à-dire leur largeur, étant égale à deux à cinq fois l'étendue linéaire en coupe transversale perpendiculaire à ladite largeur, ledit bandage pneumatique étant caractérisé par le fait que lesdits éléments de renforcement des nappes de carcasse (13-18) ont un module d'au moins 35 cN/dTex et un retrait maximal de 5%, et par le fait que les éléments de renforcement des nappes de ceinture (31-38) sont constitués par des monofilaments en nylon d'au moins 3.000 dTex ayant une résistance d'au moins 6 cN/dTex, un module d'au moins 35 cN/dTex et un retrait maximal de 5%.

2. Bandage pneumatique (10) tel que décrit à la revendication 1, caractérisé par au moins une couche (60-62) d'une bande enroulée en spirale intercalée entre lesdites nappes de ceinture (31-38) et une portion de bande de roulement (40) du bandage pneumatique, ladite bande étant renforcée par des câblés en nylon à multifilaments orientés en formant essentiellement un angle de 0° par rapport au plan équatorial (CP) du bandage pneumatique.

3. Bandage pneumatique (10) tel que décrit dans l'une quelconque des revendications précédentes, caractérisé par au moins deux nappes de carcasse (15-18) à retournement vers le haut et par au moins une nappe de carcasse (13-14) à retournement vers le bas, chaque nappe de carcasse à retournement vers le haut étant repliée axialement et radialement vers l'extérieur autour de chaque tringle de talon (11, 12) et chaque nappe de carcasse à retournement vers le bas étant repliée au moins en partie vers l'intérieur autour des nappes de carcasse à retournement vers le haut et autour des tringles de talons.

4. Bandage pneumatique (10) tel que décrit dans l'une quelconque des revendications précédentes, caractérisé par le fait que les éléments de renforcement de la nappe de carcasse (15) radialement la plus interne sont orientés en formant un angle d'environ 82° par rapport au plan équatorial, les éléments de renforcement de la nappe de carcasse (13) radialement la plus externe étant orientés en formant un angle de 90° par rapport au plan équatorial, et les éléments de renforcement d'au moins une nappe de carcasse disposée entre les nappes de carcasse la plus interne et la plus externe étant orientés en formant un angle d'environ 85° par rapport au plan équatorial (CP).

5. Bandage pneumatique (10) tel que décrit à la revendication 3 ou 4, caractérisé par le fait qu'il comprend au moins une bande (65, 66) renforcée par des câblés en nylon, intercalée entre la nappe de carcasse (14) radialement la plus interne à retournement vers le bas et la nappe de carcasse adjacente (18) à retournement vers le haut, les bords radialement les plus externes des bandes de renforcement étant disposés radialement à l'extérieur du bord radialement le plus externe de l'une quelconque des nappes de carcasse (15-18) à retournement vers le haut, les bandes suivant la voie des nappes à retournement vers le haut, s'étendant le long du sommet (67) et étant repliées autour des tringles de talons respectives (11, 12).

6. Bandage pneumatique (10) tel que décrit à la revendication 5, caractérisé par le fait que les câblés en nylon des bandes de renforcement (65, 66) sont disposés en formant des angles de 30° à 60° par rapport à la direction circonférentielle du bandage pneumatique.

7. Bandage pneumatique (10) tel que décrit dans l'une quelconque des revendications précédentes, caractérisé par le fait que les éléments de renforcement en monofilament sont du nylon d'au moins 3.500 dTex ayant une résistance d'au moins 7 cN/dTex, un module d'au moins 40 cN/dTex, un allongement à la rupture d'au moins 18% et un retrait maximal de 4%.

8. Bandage pneumatique (10) tel que décrit dans l'une quelconque des revendications précédentes, caractérisé par le fait que les éléments de renforcement des nappes de ceinture (31-38) possèdent une section transversale oblongue, leur étendue linéaire maximale en coupe transversale, c'est-à-dire leur largeur, étant égale à deux à cinq fois l'étendue linéaire en coupe transversale perpendiculaire à ladite largeur.
